# EUROPEAN PATENT APPLICATION

(11) **EP 2 865 504 A1**
(43) Date of publication of application: **29.04.2015**
(21) Application number: 14185955.3
(22) Date of filing: 23.09.2014
(51) Int. Cl.: B29C 44/34, B29C 44/56

(54) **A method of manufacturing a foam showing a gradient poisson's ratio behaviour**

(30) Priority: 14.10.2013 GB 201318128
(71) Applicant: Rolls-Royce plc, London SW1E 6AT (GB)
(72) Inventor: Bianchi, Matteo, Derby, Derbyshire DE24 8BJ (GB); Scarpa, Fabrizio, Derby, Derbyshire DE24 8BJ (GB)
(74) Representative: Gee, Philip David

(57) **Abstract**

There is disclosed a method of manufacturing a foam having a Poisson's ratio which varies across at least a region of the foam in a gradient distribution from a negative value to a positive value. The method includes the steps of: a) providing an open-cell foam (1); b) applying a compressive force (F) to a localised region (7) of the foam to collapse the foam (1) in said localised region (7), whilst leaving other regions (8) of the foam un-collapsed; c) heating the foam (1) to a predetermined temperature whilst continuing to apply said compressive force (F) to said localised region (7) of the foam (1); and d) subsequently cooling the foam (1) whilst continuing to apply said compressive force (F) to said localised region (7) of the foam. Also disclosed is a foam (1) according having a first region (7) which exhibits a negative Poisson's ratio, a second region (8) spaced from the first region and which exhibits a positive Poisson's ratio, and an intermediate region (10) located between said first and second regions (7, 8) and across which the Poisson's ratio of the foam (1) varies in a gradient distribution from a negative value to a positive value.

## Description

The present invention relates to a method of manufacturing a foam having a Poisson's ratio which varies across at least a region of the foam, and is particularly concerned with manufacturing a foam having a Poisson's ration which varies across at least a region of the foam in a gradient distribution from a negative value to a positive value.

Materials having a negative Poisson's ratio, when stretched, become thicker in a direction perpendicular to the direction of the applied force. This behaviour is a consequence of hinge-like structures within the material which flex when stretched. Materials which display a negative Poisson's ratio are often referred to as "auxetic" materials, and quite clearly have very different properties to non-auxetic conventional materials having a positive Poisson's ratio. Auxetic materials have mechanical properties characterised by high energy absorption and high fracture resistance, and are also highly absorbent.

It is known that auxetic materials can be manufactured from open-cell foams such as open-cell polyurethane foam. Open-cell foams are foams in which the cells are not closed, but communicate with one another through openings in the cell walls. The cells can be considered to be defined by ribs rather than walls such that the cells create a network of interconnected pores within the foam.

WO9925530 describes a method of manufacturing an auxetic foam in which a piece of low density open-cell polyurethane foam is first placed within a mould. The mould comprises sets of opposing plates which are moved towards each other to compress the foam in three orthogonal directions. Compression of the foam causes the ribs of the cells to buckle. The foam is then heated under compression to a plastic or semi-plastic state which causes the ribs to become permanently deformed. The foam is subsequently cooled to set the ribs in their deformed state thereby creating a foam in which the cells have a re-entrant structure. It is this re-entrant structure which provides the hinge-like structures that give rise to a foam having a negative Poisson's ratio.

The method described in WO9925530 involves compression of the foam across its entire extent, and is thus effective to produce an auxetic foam having a negative Poisson's ratio which is substantially uniform across the entire extent of the foam.

There are perceived to be potential advantages to an auxetic foam having a Poisson's ratio which varies across its extent. For example, certain applications for sound proof panels, acoustic linings, duct liners, vibration mat pads and filters could be improved if such an auxetic material could be provided. However, heretofore there have not been provided any suitable methods to produce such a foam.

It is a preferred object of the present invention to provide an improved method of manufacturing a foam, and more particularly to provide a method of manufacturing a foam having a Poisson's ratio which varies across at least a region of the foam in a gradient distribution..

It is another object of the present invention to provide a foam having a Poisson's ratio which varies across at least a region of the foam in a gradient distribution from a negative value to a positive value.

According to a first aspect of the present invention, there is provided a method of manufacturing a foam having a Poisson's ratio which varies across at least a region of the foam in a gradient distribution, the method comprising the steps of:
a) providing an open-cell foam;
b) applying a compressive force to a localised region of the foam to collapse the foam in said localised region, whilst leaving other regions of the foam un-collapsed;
c) heating the foam to a predetermined temperature whilst continuing to apply said compressive force to said localised region of the foam; and
d) subsequently cooling the foam whilst continuing to apply said compressive force to said localised region of the foam.

Preferably, said gradient distribution of Poisson's ration varies from a negative value to a positive value.

Step a) may involve placing the open-cell foam on a pressing surface and compressing said localised region of the foam between a pressing tool and said pressing surface.

In a preferred embodiment, said pressing tool is arranged for movement towards said pressing surface and is sized and configured to engage and compress said foam only in said localised region.

The open-cell foam is optionally an amorphous solid or non-crystalline solid.

The predetermined temperature is preferably greater than the softening point of the foam and lower than the melting temperature of the foam.

The foam may be made from polymeric material.

The predetermined temperature is preferably not less than 120°C and not more than 170°C. This temperature range is suitable for the use of PU-PE based foams.

Step c) may be performed in an oven, and the oven is optionally an autoclave.

Step d) may involve cooling the foam to a temperature below the softening point of the foam.

Step d) may be performed by immersing or otherwise exposing the foam to cooling water. Alternatively, the foam may be cooled in air at room temperature.

According to another aspect of the present invention, there is provided a foam produced by the method defined above.

According to a further aspect of the present invention, there is provided a foam having at least a region across which the Poisson's ratio of the foam varies in a gradient distribution.

Preferably, the gradient distribution of Poisson's ration varies from a negative value to a positive value.

Preferably, said foam has a first region which exhibits a negative Poisson's ratio, a second region spaced from the first region and which exhibits a positive Poisson's ratio, and an intermediate region located between said first and second regions and across which the Poisson's ratio of the foam varies in a gradient distribution from a negative value to a positive value.

So that the invention may be more readily understood, and so that further features thereof may be appreciated, embodiments of the invention will now be described by way of example with reference to the accompanying drawings in which:
Figure 1 is a schematic illustration showing part of the apparatus used to carry out the invention, and also showing an open-cell foam in cross-section;
Figure 2 is a schematic illustration similar to that of figure 1, but which shows the apparatus applying a compressive force to a region of the foam;
Figure 3 shows the apparatus of figure 2 enclosed within an oven; and
Figure 4 is a schematic cross-sectional view showing a piece of foam manufactured according to the present invention.

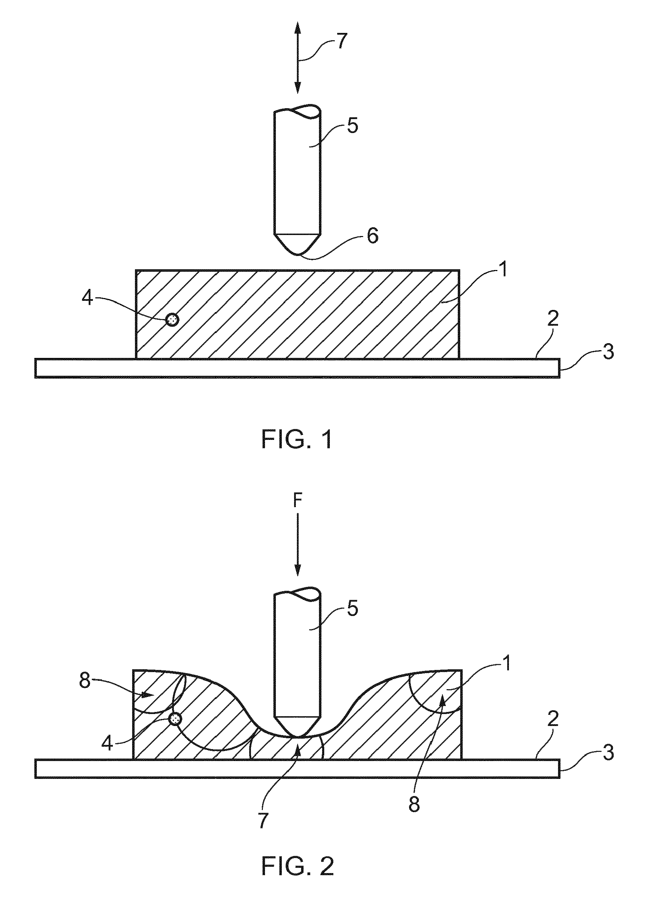

Turning now to consider the drawings in more detail, figure 1 shows a foam pad 1 placed on a pressing surface 2, the pressing surface 2 being defined by the upper face of a tooling plate 3. The tooling plate, in this example, is a rigid aluminium plate of generally planar configuration. It is to be appreciated, however, that in other embodiments the tooling plate and associated pressing surface 2 need not be planar and could take other configurations, whilst the tooling plate 3 could also be formed from other suitable materials. A thin release film (not shown) may be laid over the pressing surface 2 before the foam pad 1 is laid upon it

The foam pad 1 is formed from an open-cell foam such as open-cell polyurethane foam which has a known and predetermined softening point Tₛ, the softening point being the temperature at which the foam softens beyond a predetermined softness.

A temperature sensor 4, such as a thermocouple, is inserted into the core of the foam pad 1 and is connected to suitable measuring equipment. The temperature sensor 4 is positioned within the foam pad 1 so that it measures the internal temperature of the foam pad 1.

Figure 1 also shows a pressing tool 5 positioned above the foam pad 1 and in spaced relation to the tooling plate 3. The pressing tool 5 in the illustrated example takes the form of an indenter and defines a roundly pointed end 6 which is presented in a downwards manner towards the foam pad 1. The pressing tool 5 is arranged to axial movement relative to the tooling plate 3, as denoted by arrow 7 in figure 1.

The method of illustrated embodiment involves applying a compressive force to the foam pad 1 between the pressing tool 5 and the pressing surface 2 of the tooling plate 3. This is illustrated schematically in figure 2. The pressing tool 5 is first advanced towards to the foam pad 1 such that the end 6 of the tool moves into contact with the upper surface of the foam pad 1. The pressing tool 6 is then forcibly urged towards the tooling plate 3, under a force F, in order to compress the foam pad 1 between the pressing tool 6 and the pressing surface 2 of the tooling plate 3.

It is important to note, as illustrated in figure 2, that the pressing tool 5 only applies compressive force F to a localised region of the foam pad 1, indicated generally at 7 in figure 2. Other regions of the foam pad, such as those denoted at 8 in figure 1, are substantially uncompressed by the tool. This localised compressive force F is effective to collapse the cells of the foam pad's structure, and hence deform the ribs of the cells, in the localised region 7 between the tool 6 and the pressing surface 2. The other regions 8 of the foam are left substantially uncompressed in this manner.

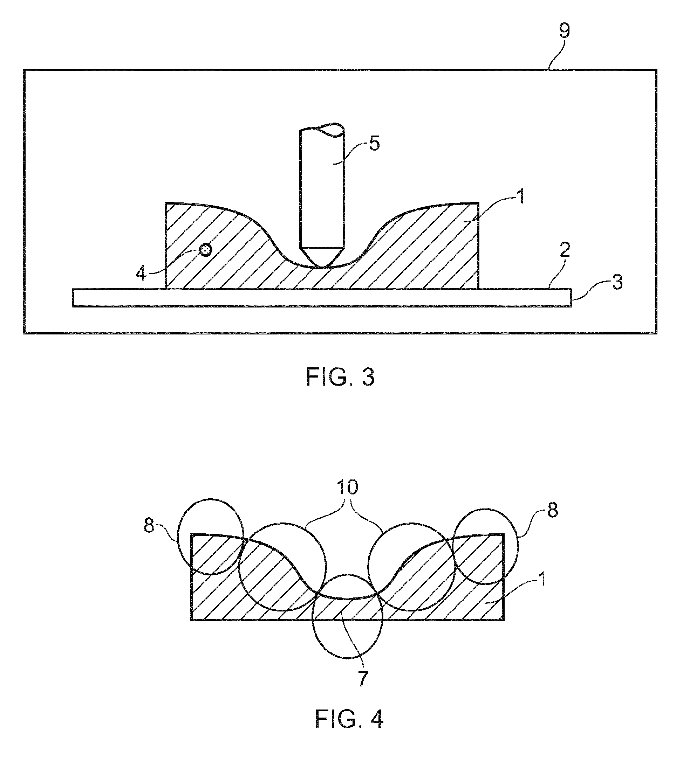

Turning now to consider figure 3 the assembly, comprising the tooling plate 3, the locally compressed foam pad 1, the thermocouple 4 and the pressing tool 5, is then placed in an oven 9 which is set to an oven-temperature significantly above the softening point Tₛ of the foam. The foam pad 1 is thus heated within the oven 9. The localised region 7 of the foam pad 1 is maintained under compression by the compressive force F during this heating step.

The foam pad 1 is removed from the oven 9 when the internal temperature of the foam pad 1, which is monitored by the thermocouple 4 and its associated measuring equipment, exceeds the softening point Tₛ of the foam. In the preferred example of polyurethane foam, the foam pad 1 is removed from the oven 9 when its internal temperature reaches approximately 135°C. When the foam pad 1 is heated to a temperature exceeding the softening point Tₛ of the foam material in this manner, the foam pad 1 softens and becomes permanently deformed. It is important to remove the foam pad 1 from the oven 9 before its internal temperature reaches the melting temperature of the foam material.

When the foam pad 1 is removed from the oven it is cooled, either by exposing it to cooling water, or simply by allowing it to cool in air at ambient temperature. The foam pad 1 is thus cooled back down to a temperature below the softening point Tₛ of the foam material.

The foam produced by the above-described method has very interesting properties. The resulting foam pad 1, shown schematically in figure 4, displays auxetic properties in the localised region 7 but conventional properties in the other regions 8 which are shown distal to the localised region 7 and which were substantially uncompressed by the production process. In other words, the foam pad 1 has a negative Poisson's ratio in the localised region 7, but a positive Poisson's ratio in regions remote from the localised region. However, what is particularly interesting is that in the intermediate regions 10, located between the localised auxetic region 7 and the distal conventional regions 8, the foam material has a Poisson's ratio which varies in a gradient (linear) distribution from a negative value adjacent the localised region 7 to a positive value adjacent the distal regions 8.

The above-described linear distribution of Poisson's ratio gives the foam pad 1, and in particular the intermediate regions 9 (which can be subsequently cut or otherwise removed from the whole pad 1 for use on their own) unique properties. Not only does the Poisson's ratio vary in a gradient (linear) distribution in these regions of the foam pad, but so does the stiffness of the resulting foam material.

It is anticipated that foam produced according to the method of the present invention will have particular application for sound proof panels, acoustic lining such as duct liners, vibration mat pads and filters for use with gases or liquids.

It should be recognised that the invention is not limited to polymeric foams, but may, for example be applied to other types of foams such as metallic foams.

Furthermore, it is to be noted that whilst the invention has been described above with reference to an embodiment involving the steps of heating the foam to predetermined temperature which is greater than the softening point of the foam, and subsequently cooling the foam to a temperature below the softening point, in alternative embodiments the glass transition temperature of the foam may be used as a reference temperature instead of the softening point of the foam. In such embodiments, therefore, the step of heating will involve heating the foam to a predetermined temperature above the glass transition temperature of the foam, and the step of cooling will involve cooling the foam to a temperature below the glass transition temperature of the foam.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A method of manufacturing a foam having a Poisson's ratio which varies across at least a region of the foam in a gradient, the method being **characterised by** the steps of:
a) providing an open-cell foam (1);
b) applying a compressive force (F) to a localised region (7) of the foam to collapse the foam (1) in said localised region (7), whilst leaving other regions (8) of the foam un-collapsed;
c) heating the foam (1) to a predetermined temperature whilst continuing to apply said compressive force (F) to said localised region (7) of the foam (1); and
d) subsequently cooling the foam (1) whilst continuing to apply said compressive force (F) to said localised region (7) of the foam.

2. A method according to claim 1, wherein step a) involves placing the open-cell foam (1) on a pressing surface (2) and compressing said localised region (7) of the foam between a pressing tool (5) and said pressing surface (2).

3. A method according to claim 2, wherein said pressing tool (5) is arranged for movement towards said pressing surface (2) and is sized and configured to engage and compress said foam (1) only in said localised region (7).

4. A method according to any preceding claim, wherein said open-cell foam (1) is an amorphous solid or non-crystalline solid.

5. A method according to claim 4, wherein said predetermined temperature is greater than the softening point of the foam (1) and lower than the melting temperature of the foam (1).

6. A method according to claim 4 or claim 5, wherein the foam (1) is made from polymeric material.

7. A method according to any preceding claim, wherein the predetermined temperature is not less than 120°C and not more than 170°C.

8. A method according to any preceding claim in which step c) is performed in an oven (9).

9. A method according to claim 8, wherein the oven (9) is an autoclave.

10. A method according to any one of claims 4 to 9, wherein step d) involves cooling the foam (1) to a temperature below the softening point of the foam (1).

11. A method according to any preceding claim, wherein step d) is performed by immersing or otherwise exposing the foam (1) to cooling water.

12. A method according to any one of claims 1 to 10, wherein step d) is performed by allowing the foam (1) to cool in air at room temperature.

13. A foam (1) produced by the method of any preceding claim.

14. A foam (1) having at least a region across which the Poisson's ratio of the foam varies in a gradient distribution.

15. A foam (1) according to claim 14 having a first region (7) which exhibits a negative Poisson's ratio, a second region (8) spaced from the first region and which exhibits a positive Poisson's ratio, and an intermediate region (10) located between said first and second regions (7, 8) and across which the Poisson's ratio of the foam (1) varies in a gradient distribution from a negative value to a positive value.
